Europäisches Patentamt

European Patent Office

Office européen des brevets

(11) Veröffentlichungsnummer: **0 153 724**
**A2**

# (12) EUROPÄISCHE PATENTANMELDUNG

(21) Anmeldenummer: **85102069.3**

(22) Anmeldetag: **26.02.85**

(51) Int. Cl.⁴: **B 27 B 17/08**

(30) Priorität: **28.02.84 DE 3407625**

(43) Veröffentlichungstag der Anmeldung:
**04.09.85 Patentblatt 85/36**

(84) Benannte Vertragsstaaten:
**AT CH DE GB IT LI SE**

(71) Anmelder: **Sachs-Dolmar GmbH**
**Jenfelder Strasse 38**
**D-2000 Hamburg 70(DE)**

(72) Erfinder: **Vollertsen, Otto**
**Sootweg 19**
**D-2000 Hamburg 71(DE)**

(72) Erfinder: **Bohlmann, Volker, Dr.**
**Füerbarg 11**
**D-2000 Hamburg 65(DE)**

(74) Vertreter: **Richter, Joachim, Dipl.-Ing. et al,**
**Patentanwälte Richter u.Werdermann Neuer Wall 10**
**D-2000 Hamburg 36(DE)**

(54) **Bremsvorrichtung zum Abbremsen der Sägekette einer tragbaren Motorkettensäge.**

(57) Zum Auslösen des Bremsvorganges weist die Bremsvor-richtung der Motorkettensäge als Auslösegewicht (60) eine Rolle auf, die in einem Raum eines Gewichthalters (50) in allen Ebenen frei beweglich ist, und aufgrund dessen die Kettenbremse sowohl bei einer unkontrollierten Bewegung in vertikaler als auch in horizontaler Richtung auslösbar ist, wobei darüber hinaus der Bremsvorgang auch bei Betäti-gung des Handschutzes (11) auslösbar ist.

EP 0 153 724 A2

Croydon Printing Company Ltd.

Bremsvorrichtung zum Abbremsen der Sägekette einer tragbaren Motorkettensäge.

Die Erfindung betrifft eine Bremsvorrichtung zum Abbremsen der Sägekette einer tragbaren Motorkettensäge, die
mit einem bei Auftreten eines Gefahrenzustandes ansprechenden Fühler, der als bei einer Schleuderbewegung der
Säge mit einer Hand des Sägenführers in Berührung bringbarer, verschwenkbarer, an dem Gehäuse der Kettensäge drehbar
gehaltener Handschuthebel ausgebildet ist, durch dessen
Bewegung eine mit dem Handschutzhebel in Wirkverbindung
stehende Reibungsbremse betätigbar ist, die auf eine mit
dem Antriebskettenrad der Kettensäge verbundene Trommel
einwirkt und mit einer Sicherheitseinrichtung versehen
ist, die bei Auftreten einer unkontrollierten Bewegung
der umlaufenden Sägekette die Reibungsbandbremse betätigt.

Schleuderbewegungen können bei tragbaren Motorkettensägen leicht auftreten, wenn der über die Oberseite der
Schwertplatte verlaufende Teil der Sägekette mit einem
festen Gegenstand, wie z.B. einem Zweig, in Berührung kommt.
Bei dem hierdurch möglichen Hochschleudern der Säge kann
der Sägenführer, wenn er den vorderen, bügelförmig ausgebildeten Handgriff der Säge losläßt, im Gesicht oder am Oberkörper verletzt werden. Um dies zu verhindern, sind bereits
Schutzeinrichtungen bekannt geworden, die die Kette bei
einer plötzlichen Schleuderbewegung der Säge abbremsen
sollen. Für die Auslösung von Bremsvorrichtungen zum Abbremsen der Sägekette einer tragbaren Motorkettensäge ist die
Verwendung klinkenartiger Auslösevorrichtungen bekannt.

So ist eine Bremseinrichtung für Motorsägen bekannt, die
einschenklige Klinkenhebel aufweist, die einseitig drehbar gelagert und mit einer Zugfeder und dem die Trommel des Antriebskettenrades umfassenden Bremsband verbunden sind. Bei dieser Bremseinrichtung besteht der Nachteil, daß zum Ausrasten der Sperrklinke an den Klinkenhebel relativ hohe Kräfte erforderlich sind. Hierdurch besteht die Gefahr einer Verzögerung des Ansprechens der Bremseinrichtung, so daß ein ausreichender Schutz des Sägenführers nicht gewährleistet ist ( DE-A- 25 17 707 und 24 40 483).

Ferner ist eine Bremseinrichtung bekannt, bei der ein Auslösebügel vorgesehen ist, an dem ein Nocken angeformt ist, der an den Anschlag eines Betätigungsgliedes zur Anlage bringbar ist. Dieses Betätigungsglied ist federbeaufschlagt und mit dem freien Endabschnitt des Bremsbandes verbunden. Bei dieser Bremseinrichtung werden jedoch Vibrationen und Stöße, wie sie im normalen Sägebetrieb auftreten, auf den Auslösebügel übertragen und führen daher leicht zu einer Lösung der Verbindung mit dem Betätigungsglied. Gerade beim Sägen von knorrigem Holz od.dgl. kann es somit leicht eintreten, daß die Bremseinrichtung ausgelöst wird, ohne daß ein Gefahrenzustand eingetreten ist, so daß eine derartig ausgebildete Bremseinrichtung zu einer Beeinträchtigung der Sägeleistung des Sägenführers beiträgt (US-A- 39 82 616, DE-A- 24 59 528).

Es ist ferner eine Bremseinrichtung bekannt, die jedoch durch die Verwendung eines zweiarmigen Hebels eine aufwendige konstruktive Ausgestaltung aufweist. Hinzu kommt, daß Schwenkbewegungen des Sägeblattes, die auch bei einem normalen Sägebetrieb auftreten, unmittelbar über den Hebel auf die Bremseinrichtung übertragen werden, so daß auch hier die Bremseinrichtung ansprechen kann, ohne daß eine Gefährdung des Sägenführers gegeben ist (DE-A- 26 21 812).

Bei der aus der US-A- 39 34 345 zu entnehmenden Konstruktion sind die Enden des Bremsbandes direkt an dem Auslösehebel befestigt.

Die PCT-PS WO 80/00548 sieht eine Anlenkungsart der Enden des Bremsbandes vor, nach der das Bremsband mit seinem einen Ende an dem Auslösehebel befestigt ist, während das andere Ende an dem Maschinengehäuse angelenkt ist.

Eine sehr komplizierte Führung des Bremsbandes sieht die DE-A- 28 31 097 vor. Bei dieser bekannten Ausführungsform ist das Bremsband einendseitig an dem Maschinengehäuse befestigt, während das andere Ende des Bremsbandes nach zahlreichen Umlenkungen über Stifte und Bolzen an dem Auslösehebel befestigt ist.

Bei der Bremsvorrichtung nach der DE-A- 26 02 247 ist das eine Ende des Bremsbandes an dem Maschinengehäuse befestigt, während das andere Ende des Bremsbandes an dem freien Ende eines Winkelhebels angelenkt ist, der unter der Einwirkung einer Feder steht und vermittels eines Stellgliedes von dem Auslösehebel betätigbar ist.

Ferner ist eine Befestigung des Bremsbandes in der Weise bekannt, daß das eine Ende des Bremsbandes an dem Auslösehebel befestigt ist, während das andere Ende des Bremsbandes über einen Bolzen geführt und dann an dem Maschinengehäuse befestigt ist (DE-A- 27 16 448, US-A- 40 59 895).

Eine Bremsvorrichtung für Kettensägen, die mit einem Kniehebelgelenk arbeitet, ist durch die US-A- 40 77 125 bekannt. Bei dieser Bremsvorrichtung steht der Auslösehebel über eine federbeaufschlagte Steuerstange mit den beiden Hebeln des Kniehebelgelenkes in Verbindung, wobei das freie Ende der Betätigungsstange an dem gemeinsamen Verbindungsgelenk der beiden Hebel angreift. Durch Überführung der beiden Hebel des Kniehebelgelenkes in eine Winkelstellung bei einer Betätigung des Auslösehebels wird die Bandbremse angezogen, die jedoch nicht mit ihren beiden Enden direkt an einem der beiden Hebel des Kniegelenkes befestigt ist.

Allen bekannten Bremsvorrichtungen ist hiernach gemeinsam, daß das Bremsband mit einem Ende an dem die Bremsvorrichtung aufnehmenden Gehäuse und mit seinem anderen Ende an dem Hebel einer Betätigungseinrichtung befestigt ist und auch bei derjenigen Ausführungsform, bei der ein Kniehebelgelenk zur Betätigung der Bandbremse vorgesehen ist, sind die Bremsbandenden nicht unmittelbar mit dem Kniehebelgelenk verbunden. Hinzu kommt noch, daß die bekannten Ausführungsformen von Bremsvorrichtungen teilweise von komplizierter Bauart sind.

Darüber hinaus sind auch Sicherheitseinrichtungen bei Motorkettensägen bekannt, die einen auf Beschleunigungskraft ansprechenden Massekörper aufweisen und mit einer Bremseinrichtung in Wirkverbindung stehen. Bei einer derartigen Sicherheitseinrichtung ist der die Bremseinrichtung auslösende Massekörper zur Impulsgabe aus seiner Ruhelage durch Beschleunigungskräfte verlagerbar, die in einer einzigen Ebene wirken. Diese Sicherheitseinrichtung tritt bei Auftreten unkontrollierter Beschleunigungskräfte, etwa bei Aufwärtsstößen des Sägeschwertes, in Funktion.

Des weiteren ist eine Motorkettensäge mit einer Sicherheitseinrichtung bekannt, die einen auf Beschleunigungskraft ansprechenden Massekörper aufweist und mit einer Bremseinrichtung in Wirkverbindung steht, wobei der Massekörper mindestens einen unter Haltekraft stehenden Abstützteil aufweist und von diesem unter Einwirkung der Beschleunigungskraft verlagerbar als monostabiler Trägheitsschalter angeordnet ist. Mit dieser Sicherheitseinrichtung wird erreicht, daß das Massekörper ringsum nach allen Seiten einen Kontakt zur Einschaltung der Bremseinrichtung auslöst (DE-A- 30 18 952).

Die Erfindung löst die Aufgabe, eine Bremsvorrichtung mit einer Sicherheitseinrichtung zu schaffen, mit der der Bremsvorgang der umlaufenden Sägekette sowohl bei einer unkontrollierten Bewegung in vertikaler Weise als auch in horizontaler Richtung auslösbar ist.

Zur Lösung dieser Aufgabe wird eine Bremsvorrichtung der gattungsgemäßen Art vorgeschlagen, die erfindungsgemäß in der Weise ausgebildet ist, daß der an dem Gehäuse der Kettensäge drehbar gelagerte, den Handschutzhebel tragende Auslösehebel über eine Verbindungslasche mit einem Bremshebel verbunden ist, der einendseitig an einem feststehenden Bolzen schwenkbar gehalten mittels einer Feder in die Bremsstellung überführbar ist sowie an dessen anderem freien Ende die beiden Enden des Bremsbandes in einem Abstand voneinander drehbar angelenkt sind, daß die Verbindungslasche mit ihrem einen Ende im Bereich des Anlenkungsbolzens für das Ende des Bremsbandes an dem Bremshebel angelenkt ist und an ihrem anderen Ende ein Langloch zur Aufnahme und Führung eines mit dem Auslösehebel verbundenen Zapfens aufweist, daß ein um einen feststehenden Zapfen verschwenkbarer, hebelarmartiger Gewichthalter vorgesehen ist, der mittels einer Feder beaufschlagt und als Winkelhebel mit einem Drehpunkt im Verbindungsbereich der beiden Gewichthalterhebelarme ausgebildet ist, dessen einer Gewichthalterhebelarm schalenförmig zur Aufnahme eines in dem von der Schale des Gewichthalters begrenzten Raum in allen Ebenen frei beweglichen walzen- oder rollenförmigen Gewichtes ausgebildet ist, während der andere abgewinkelte Gewichthalterhebelarm an seinem freien Ende als Eingriffhaken ausgebildet ist und mit dem Bremshebel in lösbarem Eingriff steht, wobei der Auslösehebel mit der Verbindungslasche und der Gewichthalter mit dem Bremshebel derart zusammenwirken, daß durch Massenträgheit des Gewichtes dieses den Gewichthalter verschwenkend ist und zum Auslösen des Bremsvorganges außer Eingriff mit dem Bremshebel bringend ist, während durch Verschwenken des Auslösehebels durch Mitnahme der Verbindungslasche mittels des Auslösehebelzapfens der Bremshebel in Eingriff mit dem Eingriffhaken des Gewichthalters bringbar ist, und daß der das Gewicht aufnehmende Gewichthalterhebelarm einen Nocken aufweist, der mit einer an dem Auslösehebel im Bereich des Nockens liegenden angeformten Nase derart in Wirkverbindung steht, daß bei einem Auslösen des Handschutzhebels durch die Bedienungsperson durch Beaufschlagung des Nockens an dem Gewichthalter durch die Nase am Auslösehebel der Gewichthalter außer Eingriff mit dem Bremshebel bringbar ist.

Eine derart ausgebildete Bremsvorrichtung ermöglicht einerseits eine Betätigung der Reibungsbremse durch Berührung des an dem Gehäuse der Kettensäge gelagerten Handschutzhebels durch die Hand des Sägenführers bei Auftreten eines Gefahrenzustandes und andererseits ist durch die Sicherheitseinrichtung die Möglichkeit gegeben, daß bei einem plötzlichen Auftreten einer unkontrollierten Beschleunigung oder Bewegung , und zwar unabhängig durch den Auslösehebel, der von dem Handrücken des Sägenführers ausgelöst wird, der Bremsvorgang eingeleitet wird. Durch diese Sicherheitseinrichtung wird somit bei einer auftretenden Beschleunigung durch das in dem Gewichthalter vorgesehene Gewicht die Kettenbremse vollautomatisch ausgelöst, indem nämlich durch auftretende Massenträgheit das Gewicht in dem Gewichthalter nach unten gedrückt wird. Durch Eigenverstärkung wird die nötige Bremskraft aufgebracht. Derartige Beschleunigungsmomente treten immer dann auf, wenn beispielsweise bei Betriebszustand der Säge die Sägekette sich in dem zu bearbeitenden Baumstamm festhakt mit der Folge, daß die Sägeschiene mit der Sägekette an dem Stamm abrollt, hierdurch ein Beschleunigungsmoment auftritt, was zu einem Rückschlag der Säge und damit zu einer Verletzung des Sägenführers führen kann. Durch die Verbindung einer derartigen Sicherheitseinrichtung, mit der bei einem Auftreten plötzlicher Beschleunigungen oder Bewegungen mittels des Gewichtes in dem Gewichthalter die Kettenbremse vollautomatisch ausgelöst wird, und einer Bremsvorrichtung, die vom Sägenführer selbst zu betätigen ist, ist ein hohes Maß an Sicherheit für den Sägenführer gewährleistet, wobei darüber hinaus sichergestellt ist, daß bei auftretenden Vibrationen und Stößen, wie sie im normalen Sägebetrieb auftreten, die Sicherheitseinrichtung nicht selbsttätig ausgelöst werden kann. Ein größtmöglicher Schutz des Sägenführers ist insofern gegeben, als bei einer Betätigung der Bremsvorrichtung , sei es durch Handberührung des Sägenführers oder sei es bei Auftreten einer unkontrollierten Bewegung, die Bremsvorrichtung sofort anspricht. Als Auslösegewicht wird bei dieser Bremsvorrichtung eine Rolle verwendet, die in einem Raum in allen Ebenen frei beweglich ist und aufgrund dessen die Kettenbremse sowohl bei einer unkontrollierten Bewegung in vertikaler als auch in horizontaler Richtung ausgelöst wird.

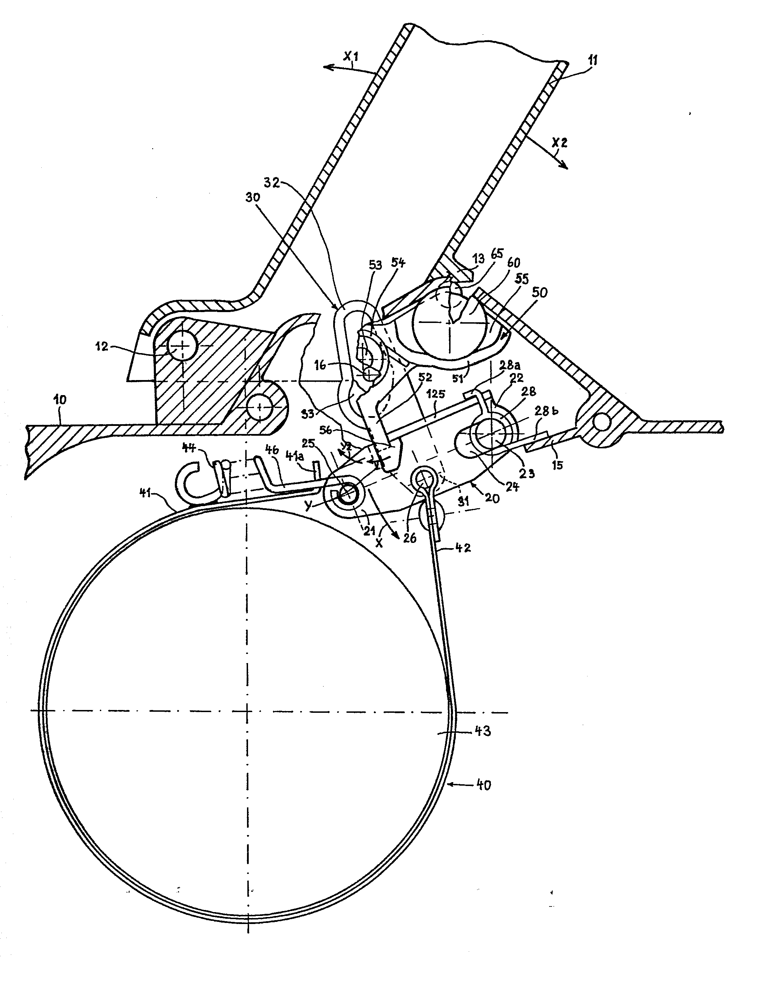

In der Zeichnung ist eine erfindungsgemäß' ausgebildete Bremsvorrichtung teils in Ansicht, teils in einem senkrechten Schnitt dargestellt.

Bei der in der Zeichnung dargestellten Ausführungsform einer Bremsvorrichtung ist mit 10 das Kurbelgehäuse bzw. der Kettenradschutz einer in an sich bekannter Weise ausgebildeten und in der Zeichnung nicht dargestellten Kettensäge bezeichnet, die mit einer Bremsvorrichtung und mit einer Sicherheitseinrichtung zum Abbremsen der Sägekette versehen ist.

An dem Gehäuse 10 ist ein Auslösehebel 11 mit einem Handschutz bzw. Handschutzhebel verschwenkbar um einen Zapfen 12 angeordnet. An der dem Schwenkpunkt um den Zapfen 12 abgelegenen Seite ist an dem Auslösehebel 11 eine Nase 13 angeformt, auf die nachstehend noch näher eingegangen wird.

Die Bremsvorrichtung besteht ferner aus einem Bremsband 40, welches um eine Kupplungstrommel 43 geführt ist. Diese Kupplungstrommel 43 ist mit dem Antriebskettenrad der Kettensäge verbunden. Das Bremsband 40 ist mit seinen beiden Bremsbandenden 41,42 an dem einen Ende 21 eines nachstehend näher beschriebenen Bremshebels 20 befestigt. Das Bremsbandende 41 ist an dem Ende 21 des Bremshebels 20 an einem mit dem Bremshebel 20 fest verbundenen Anlenkungsbolzen 25 verschwenkbar gehalten, während das andere Bremsbandende 42 an einem ebenfalls mit dem Bremshebel 20 fest verbundenen Anlenkungsbolzen 26 drehbar befestigt ist, wobei die beiden Anlenkungsbolzen 25,26, wie in der Zeichnung dargestellt, nebeneinanderliegend angeordnet sind.

Das Ende 41 des Bremsbandes 40 steht unter der Einwirkung einer Zugfeder 44 derart, daß das Bremsbandende 41a in einem in der Zeichnung nicht dargestellten Längsschlitz geführt und gehalten ist, der in einem Halter 46 ausgebildet ist, der einendseitig an dem Anlenkungsbolzen 25 befestigt und mit dem einen Ende der Feder 44 verbunden ist. Das andere Ende der Feder 44 ist mit dem Bremsband 40 fest verbunden.

Der Bremshebel 20 der Bremsvorrichtung ist mit seinem anderen Ende 22 über einen feststehenden Drehzapfen 23 verschwenkbar, der in einem im Bremshebel 20 ausgebildeten Langloch 24 geführt ist. Der Bremshebel 20 wird mittels einer Feder 28 in seine Bremsstellung in Pfeilrichtung X gedrückt, d.h. aufgrund der Einwirkung der Feder 28 hat der Bremshebel 20 das Bestreben, in Pfeilrichtung X zu verschwenken. Die Feder 28, die als Spiralfeder ausgebildet ist, ist auf den Schwenkzapfen 23 aufgesetzt und stützt sich mit einem Ende 28a an dem Bremshebel 20 und mit dem anderen Ende 28b an einem am Gehäuse 10 angeformten Tragarm 15 ab. Im oberen Bereich weist der Bremshebel 20 einen seitlich abgewinkelten Abschnitt 125 auf, auf den nachstehend noch näher eingegangen wird.

Der Bremshebel 20 ist mit dem Auslösehebel 11 über eine Verbindungslasche 30 verbunden. Diese Verbindungslasche 30 ist mit ihrem einen, nämlich dem unteren Ende 31, im Bereich des Anlenkungsbolzens 26 für das Ende 42 des Bremsbandes 40 an dem Bremshebel 20 angelenkt, während das andere obere Ende 32 der Verbindungslasche 30 ein in Verbindungslaschenlängsrichtung etwa verlaufendes Langloch 33 zur Aufnahme und Führung eines mit dem Auslösehebel 11 verbundenen Zapfens 16 aufweist.

Als Sicherheits- und Bremsvorrichtung ist in dem Gehäuse 10 ein um einen feststehenden Zapfen 53 verschwenkbarer Gewichthalter 50 vorgesehen, der als Winkelhebel ausgebildet ist und mittels einer Feder 54 beaufschlagt ist, die den Gewichthalter 50 in der in der Figur gezeigten Stellung hält. Dieser als Winkelhebel ausgebildete Gewichthalter 50 ist im Verbindungsbereich der beiden Gewichthalterhebelarme 51,52 um den Zapfen 53 verschwenkbar. Der Gewichthalterhebelarm 51 ist schalenförmig ausgebildet und weist seitliche Begrenzungswände auf, von denen nur die rückwärtige Begrenzungswand in der Zeichnung bei 55 angedeutet ist, während die obere Begrenzung des von dem schalenförmigen Gewichthalterhebelarm 51 begrenzten Raumes von dem Gehäuse 10 gebildet wird.

Dieser schalenförmig ausgebildete Gewichthalterhebelarm 51 dient zur Aufnahme eines Gewichtes 60, welches als Rolle oder Walze ausgebildet ist. Das Gewicht 60, das die Funktion als Auslösegewicht hat, ist aufgrund seiner rollenförmigen Ausgestaltung in dem von dem schalenförmig ausgebildeten Gewichthalterhebelarm 51 begrenzten Raum in allen Ebenen frei beweglich.

Der Gewichthalterhebelarm 52 ist endseitig als Eingriffhaken 56 ausgebildet und greift in der Ausgangsstellung , also nicht in der Bremsstellung, unter die vordere Kante des abgewinkelten Abschnittes 125 des Bremshebels 20, so wie dies in der Zeichnung dargestellt ist.

An dem Gewichthalterhebelarm 51 des Gewichthalters 50 ist im Bewegungsbereich der Nase 13 an dem Auslösehebel 11 eine Nocke 65 angeformt. Auf das Zusammenwirken dieses Nockens 65 mit der Auslösehebelnase 13 wird nachstehend näher eingegangen.

Die Bremsvorrichtung arbeitet wie folgt:

1. Auslösen des Bremsvorganges durch das Gewicht in dem Gewichthalter.

Die Feder 54 hält zunächst den Gewichthalter in der in der Zeichnung dargestellten Ruhestellung. Dabei steht der Eingriffhaken 56 des Gewichthalterhebelarmes 52 in Eingriff mit dem Bremshebel 20. Das Bremsband 40 liegt dabei nicht an der Kupplungstrommel 43 an. Wird nunmehr durch eine unkontrollierte Bewegung eine Verlagerung des Gewichtes 60 vorgenommen, so wird durch die dabei auftretende Massenträgheit das Gewicht nach unten gedrückt mit der Folge, daß auch der Gewichthalterhebelarm 51 nach unten in Richtung zum Bremshebel 20 mit der Folge verschwenkt wird, daß der gesamte Gewichthalter 50 um den Drehzapfen 53 verschwenkt mit der Folge, daß der Eingriffhaken 56 des Gewichthalterhebelarmes 52 aus dem Bremshebel 20 ausrastet. Der Eingriffhaken 56 wird dabei in Pfeilrichtung Y verschwenkt. Da der Bremshebel 20 unter der Einwirkung der Feder 28 in Pfeilrichtung X gedrückt wird, wird durch die Freigabe des Eingriffs des Eingriffhakens 56 des Gewichthalters 50 von dem Bremshebel 20 das Ende 21 des Bremshebels 20 in Pfeilrichtung X weiter verschwenkt mit der Folge, daß durch eine Veränderung des Abstandes der beiden Anlenkungsbolzen 25,26 für das Bremsband 40 das Bremsband an die Kupplungstrommel angepreßt und somit der Bremsvorgang eingeleitet wird. Das Auslösen des Bremsvorganges erfolgt hiernach durch Massenträgheit des Gewichtes 60.

2. Spannen der Vorrichtung, wenn der Bremsvorgang aufgehoben werden soll.

Ist der Eingriffhaken 56 des Gewichthalters 50 aus dem Bremshebel ausgerastet, d.h. wenn keine mechanische Verbindung mehr zwischen dem Gewichthalter 50 und dem Bremshebel 20 besteht, ist es erforderlich, den Bremshebel 20 anzuheben, um den Eingriffhaken 56 des Gewichthalters 50 in Eingriff mit dem Bremshebel 20 zu bringen. Hierzu wird der Auslösehebel 11 mit seinem Handschutz um den Drehzapfen 12 in Pfeilrichtung X1 verschwenkt. Bei dieser Bewegung des Auslösehebels 11 in Pfeilrichtung X1 wandert der Zapfen 16 in dem Langloch 33 der Verbindungslasche 30 nach oben bis der Zapfen 16 am Ende des Langloches 33 zur Anlage kommt. Bei einer weiteren Aufswärtsbewegung des Zapfens 16 wird die Verbindungslasche 30 nach oben bewegt mit der Folge, daß das Ende 21 des Bremshebels 20 in Pfeilrichtung Y2 nach oben bewegt wird, und zwar soweit, bis der Eingriffhaken 56 des Gewichthalters 50 die vordere Kante des abgewinkelten Abschnittes 125 des Bremshebels 20 untergreift und der Bremshebel 20 in dieser Stellung arretiert ist. In dieser Stellung des Bremshebels 20 ist der vorher eingeleitete Bremsvorgang aufgehoben; das Bremsband 40 liegt nicht an der Kupplungstrommel 43 an. Steht der Gewichthalter 50 in Eingriff mit dem Bremshebel 20 entsprechend der in der Zeichnung dargestellten Stellung, dann wird der Auslösehebel und der Handschutz in die normale, in der Zeichnung dargestellte Lage zurückgeschwenkt. Dabei bleibt der Eingriffhaken 56 des Gewichthalters 50 in Einraststellung mit dem Bremshebel 20.

3. Auslösen des Bremsorganges bei Betätigung des Handschutzes bzw. Auslösehebels durch die Bedienungsperson.

Stößt die Bedienungsperson gegen den in der Zeichnung nicht dargestellten Handschutz, dann verschwenkt dieser bzw. der Auslösehebel 11 in Pfeilrichtung X2, also entgegen-gesetzt zur Spannrichtung X1. Bei dieser Bewegung des Auslösehebels 11 beaufschlagt die an dem Auslösehebel 11 angeformte Nase 13 den Nocken 65 an dem Gewichthalter 50 mit der Folge, daß der Gewichthalterhebelarm 51 zusammen mit dem Gewicht 60 nach unten gedrückt wird mit der Folge, daß der Gewichthalter 50 um den Zapfen 53 verschwenkt, so daß der Eingriffhaken 56 des Gewichthalters 50 aus dem Bremshebel 20 ausrastet. Damit ist der Bremshebel 20 freigegeben und wird mittels der Feder 28 zum Auslösen des Bremsvorganges in Pfeilrichtung X nach unten gedrückt.

0153724

Patentanspruch:

Bremsvorrichtung zum Abbremsen der Sägekette einer tragbaren Motorkettensäge , die mit einem bei Auftreten eines Gefahrenzustandes ansprechenden Fühler, der als bei einer Schleuderbewegung der Säge mit einer Hand des Sägenführers in Berührung bringbarer, verschwenkbarer, an dem Gehäuse der Kettensäge drehbar gehaltener Handschutzhebel ausgebildet ist, durch dessen Bewegung eine mit dem Handschutzhebel in Wirkverbindung stehende Reibungsbremse betätigbar ist, die auf eine mit dem Antriebskettenrad der Kettensäge verbundene Trommel einwirkt und mit einer Sicherheitseinrichtung versehen ist, die bei Auftreten einer unkontrollierten Bewegung der umlaufenden Sägekette die Reibungsbandbremse betätigt, dadurch gekennzeichnet, daß der an dem Gehäuse (10) der Kettensäge drehbar gelagerte, den Handschutzhebel tragende Auslösehebel (11) über eine Verbindungslasche (30) mit einem Bremshebel (20) verbunden ist, der einendseitig (22) an einem feststehenden Bolzen (23) schwenkbar gehalten mittels einer Feder (28) in die Bremsstellung überführbar ist sowie an dessen anderem freien Ende (21) die beiden Enden (41,42) des Bremsbandes (40) in einem Abstand voneinander drehbar bei (25,26) angelenkt sind, daß die Verbindungslasche (30) mit ihrem einen Ende (31) im Bereich des Anlenkungsbolzens (26) für das Ende (42) des Bremsbandes (40) an dem Bremshebel (20) angelenkt ist und an ihrem anderen Ende (32) ein Langloch (33) zur Aufnahme und Führung eines mit dem Auslösehebel (11) verbundenen Zapfens (16) aufweist, daß ein um einen feststehenden Zapfen (53) verschwenkbarer, hebelarmartiger Gewichthalter (50) vorgesehen ist, der mittels einer Feder (54) beaufschlagt und als Winkelhebel mit einem Drehpunkt im Verbindungsbereich der beiden Gewichthalterhebelarme (51,52) ausgebildet ist, dessen einer Gewichthalterhebelarm (51) schalenförmig zur Aufnahme eines in dem von der Schale des Gewichthalters (50) begrenzten Raum in allen Ebenen frei beweglichen walzen- oder rollenförmigen Gewichtes (60) ausgebildet ist, während der andere abgewinkelte Gewichthalterhebelarm (52) an seinem freien Ende als Eingriffhaken (56) ausgebildet ist und mit dem Bremshebel (20) in lösbarem Eingriff steht, wobei der Auslösehebel (11) mit der Verbindungslasche (30) und der Gewichthalter (50) mit dem Bremshebel (20) derart zusammenwirken, daß durch Massenträgheit des Gewichtes (60) dieses den Gewichthalter (50) verschwenkend ist und zum Auslösen des Bremsvorganges außer Eingriff mit dem Bremshebel (20) bringend ist, während durch Verschwenken des Auslösehebels (11) durch Mitnahme der Verbindungslasche (30) mittels des Auslösehebelzapfens (16) der Bremshebel (20) in Eingriff mit dem Eingriffhaken (56) des Gewichthalters (50) bringbar ist, und daß der das Gewicht (60) aufnehmende Gewichthalterhebelarm (51) einen Nocken (65) aufweist, der mit einer an dem Auslösehebel (11) im Bereich des Nockens (65) liegenden angeformten Nase (13) derart in Wirkverbindung steht, daß bei einem Auslösen des Handschutzhebels durch die Bedienungsperson durch Beaufschlagung des Nockens (65) an dem Gewichthalter (50) durch die Nase (13) am Auslösehebel (11) der Gewichthalter (50) außer Eingriff mit dem Bremshebel (20) bringbar ist.